# EUROPÄISCHE PATENTSCHRIFT

(11) **EP 0 718 737 B1**
(45) Veröffentlichungstag und Bekanntmachung des Hinweises auf die Patenterteilung: **10.05.2000**
(21) Anmeldenummer: 95114083.9
(22) Anmeldetag: 08.09.1995
(51) Int. Cl.: G05D 16/20, F02D 41/38, F02M 25/06, F02M 51/06

(54) **Verfahren und Vorrichtung zur Ermittlung der Federkraft einer Schliessfeder beim Öffnen eines Ventiles, insbesondere eines Brennstoffeinspritzventiles**
Method and device for determining the spring tension of a locking spring during opening of a valve, especially fuel injection valve
Procédé et dispositif pour déterminer la résilience d'un ressort lors de l'ouverture d'une soupape, particulièrement une soupape injectrice de carburant

(30) Priorität: 03.12.1994 DE 4443137
(43) Veröffentlichungstag der Anmeldung: 26.06.1996
(73) Patentinhaber: ROBERT BOSCH GMBH, 70442 Stuttgart (DE)
(72) Erfinder: Heyse, Jörg, Dipl.-Ing., D-71706 Markgröningen (DE); Ittlinger, Ralph, D-71229 Leonberg (DE)

(56) Entgegenhaltungen:
- EP-A- 0 108 371
- DE-A- 3 603 282
- DE-A- 3 808 388
- US-A- 4 231 340
- US-A- 4 704 999
- US-A- 5 340 032

## Beschreibung

### Stand der Technik

Die Erfindung geht aus von einem Verfahren zur Ermittlung der Federkraft einer Schließfeder beim Öffnen eines Ventiles nach der Gattung des Anspruchs 1 bzw. einer Vorrichtung zur Durchführung des Verfahrens nach der Gattung des Anspruchs 2. Bei Ventilen, insbesondere Brennstoffeinspritzventilen besteht der Bedarf, nach der Fertigmontage des Ventiles die Federkraft der Schließfeder zu messen, mit der die Schließfeder den Ventilschließkörper auf den Ventilsitz preßt. Eine derartige Messung der Federkraft soll ohne Demontage und Beschädigung des Ventiles erfolgen, so daß das Ventil auch nach der Federkraftmessung störungsfrei weiterbetrieben werden kann.

### Vorteile der Erfindung

Das erfindungsgemäße Verfahren zur Ermittlung der Federkraft einer Schließfeder beim Öffnen eines Ventiles mit den kennzeichnenden Merkmalen des Anspruches 1 bzw. die Vorrichtung zur Durchführung des Verfahrens mit den kennzeichnenden Merkmalen des Anspruches 2 hat den Vorteil, daß auf einfache Art und Weise berührungslos und ohne Beschädigung am montierten Ventil die Federkraft der Schließfeder bestimmt werden kann. Vorteilhaft ist dabei ebenfalls, daß der Ventilschließkörper bei dem erfindungsgemäßen Verfahren bzw. der erfindungsgemäßen Vorrichtung nicht von außen zugänglich sein muß, also kein am Ventilschließkörper angreifender Tastkörper erforderlich ist.

### Zeichnung

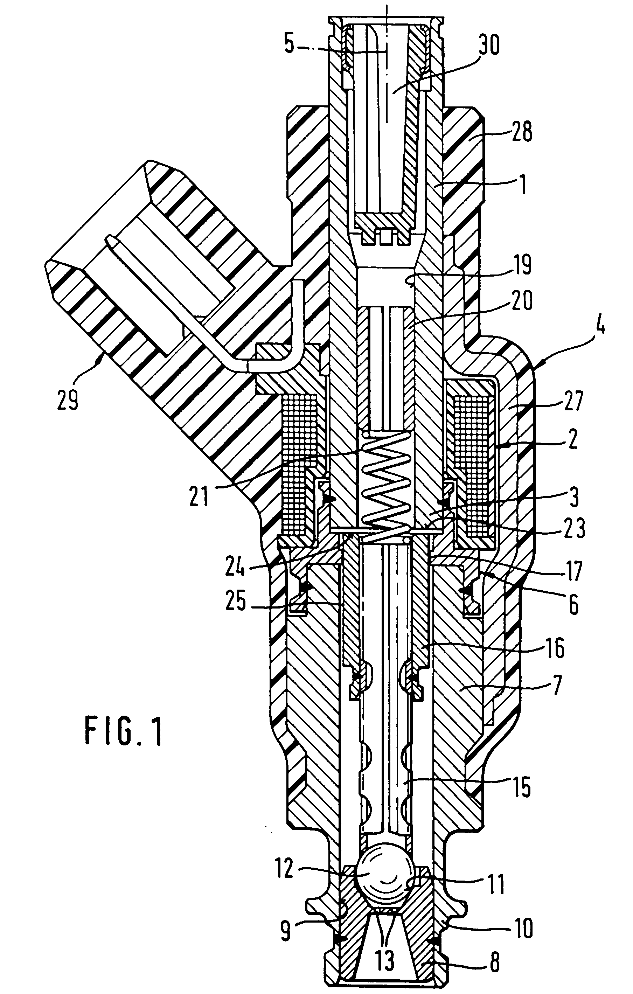

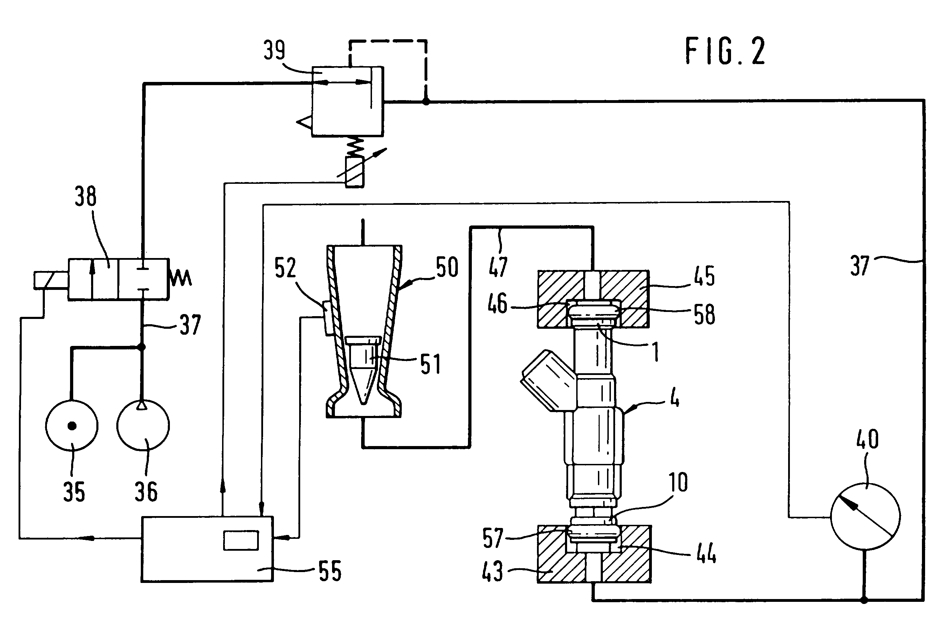

Ein Ausführungsbeispiel der Erfindung ist in der Zeichnung vereinfacht dargestellt und in der nachfolgenden Beschreibung näher erläutert. Es zeigen Figur 1 ein Brennstoffeinspritzventil bekannter Bauart, Figur 2 eine erfindungsgemäß ausgestaltete Vorrichtung zur Ermittlung der Federkraft einer Schließfeder beim Öffnen eines beispielsweise als Brennstoffeinspritzventil ausgebildeten Ventiles.

### Beschreibung des Ausführungsbeispieles

Das in der Figur 1 beispielsweise für ein Ventil dargestellte bekannte elektromagnetisch betätigbare Brennstoffeinspritzventil 4 für Brennstoffeinspritzanlagen von Brennkraftmaschinen hat einen Einlaßanschluß 1 für den Brennstoff, der als Kern dient und den eine Magnetspule 2 teilweise umgibt. Mit einem unteren Kernende 3 des Einlaßanschlusses 1 ist konzentrisch zu einer Ventillängsachse 5 dicht ein rohrförmiges metallenes Zwischenteil 6 durch Schweißen verbunden. Das Zwischenteil 6 übergreift mit seinem dem Einlaßanschluß 1 abgewandten Ende ein rohrförmiges Verbindungsteil 7 und ist mit diesem durch Schweißen dicht verbunden. In das stromabwärts liegende Ende einer Innenbohrung 9 des Verbindungsteils 7 ist ein zylinderförmiger Ventilsitzkörper 8 eingesetzt und durch Schweißen dicht montiert. Im Ventilsitzkörper 8 ist ein Ventilsitz 11 ausgebildet, mit dem ein Ventilschließkörper 12 zusammenwirkt. Stromabwärts des Ventilsitzes 11 ist im Ventilsitzkörper 8 wenigstens eine Abspritzöffnung 13 ausgebildet, über die bei geöffnetem Ventil Brennstoff in das Luftansaugrohr oder den Zylinder der Brennkraftmaschine einspritzbar ist. Das den Ventilsitzkörper 8 aufnehmende stromabwärtige Ende des Verbindungsteiles 7 bildet einen Auslaßanschluß 10, der in nicht dargestellter Weise in die Wandung des Luftansaugrohres oder Zylinders der Brennkraftmaschine eingesetzt ist. Der beim Ausführungsbeispiel kugelförmig ausgebildete Ventilschließkörper 12 ist durch Schweißen oder Löten mit einem Ende eines Verbindungsrohres 15 verbunden, während mit dem anderen Ende des Verbindungsrohres 15 ein aus weichmagnetischem Werkstoff gefertigter Anker 16 durch Schweißen verbunden ist. Der Ventilschließkörper 12, das Verbindungsrohr 15 und der Anker 16 ragen dabei in die Innenbohrung 9 des Verbindungsteils 7. Der rohrförmige Anker 16 wird durch einen Führungsbund 17 des Zwischenteils 6 geführt. In eine Strömungsbohrung 19 des Einlaßanschlusses 1 ist eine Einstellhülse 20 eingeschoben, an der eine Schließfeder 21 anliegt, die sich andererseits an dem im Anker 16 liegenden Ende des Verbindungsrohres 15 abstützt und damit den Ventilschließkörper 12 zum Ventilsitz 11 hin in Schließrichtung des Ventiles beaufschlagt. Der aus weichmagnetischem Werkstoff hergestellte Einlaßanschluß 1 hat an seinem dem Anker 16 zugewandten Kernende eine Kernstirnfläche 23, während der Anker eine dem Kernende 3 zugewandte Ankerstirnfläche 24 hat. Die Kernstirnfläche 23, die Ankerstirnfläche 24 und der zylindrische Umfang des Ankers 16 zumindest im Bereich des Führungsbundes 17 sind mit einer Verschleißschutzschicht versehen, die ein Abtragen von Werkstoff vom Umfang 25 des Ankers 16 bzw. ein Einschlagen der Kernstirnfläche 23 und der Ankerstirnfläche 24 ineinander verhindert, denn bei Erregung der Magnetspule 2 wird der Anker 16 entgegen der Kraft der Schließfeder 21 so lange zum Einlaßanschluß 1 hinbewegt, bis die Ankerstirnfläche 24 an der Kernstirnfläche 23 anliegt. Diese Anzugsbewegung des Ankers 16 führt zu einem Abheben des Ventilschließkörpers 12 vom Ventilsitz 11 und damit zu einer Öffnung des stoffeinspritzventiles.

Die Magnetspule 2 ist von wenigstens einem, im Ausführungsbeispiel als Bügel ausgebildeten, als ferromagnetisches Element dienenden Leitelement 27 umgeben, das sich in axialer Richtung über die gesamte Länge der Magnetspule 2 erstreckt und die Magnetspule 2 in Umfangsrichtung wenigstens teilweise umgibt. Das Leitelement 27 liegt mit seinem einen Ende am Einlaßanschluß 1 und mit seinem anderen Ende am Verbindungsteil 7 an und ist mit diesen durch Schweißen verbunden. Ein Teil des Ventiles ist von einer Kunststoffummantelung 28 umschlossen, die sich vom Einlaßanschluß 1 ausgehend axial über die Magnetspule 2 und das wenigstens eine Leitelement 27 bis zum Verbindungsteil 7 erstreckt. Durch die Kunststoffummantelung 28 wird zugleich ein elektrischer Anschlußstecker 29 gebildet, der elektrisch mit der Magnetspule 2 kontaktiert ist und in nicht dargestellter Weise mit einem elektronischen Steuergerät verbindbar ist. In die Strömungsbohrung 19 des Einlaßanschlusses 1 ist in bekannter Weise ein Brennstoffilter 30 eingeschoben.

In der Figur 2 ist schematisch eine Vorrichtung gezeigt, mit der die Federkraft einer Schließfeder beim Öffnen eines Ventiles ermittelt werden kann, insbesondere die Federkraft einer Schließfeder eines Brennstoffeinspritzventiles. Mit der erfindungsgemäßen Vorrichtung wird beispielsweise die Federkraft der Schließfeder 21 des in Figur 1 dargestellten Brennstoffeinspritzventiles 4 ermittelt. Die Vorrichtung umfaßt eine Druckgasquelle 35, beispielsweise eine Stickstoffflasche oder ähnliches. Als Druckgasquelle kann auch eine Pumpe 36 dienen, die Luft oder ein anderes Gas verdichtet. Der Ausgang der Druckgasquelle 35 bzw. der Pumpe 36 steht mit einer Druckgasleitung 37 in Verbindung. In der Druckgasleitung 37 ist ein Absperrventil 38 angeordnet, das beispielsweise als 2/2-Wegeventil ausgebildet ist und in seiner Ausgangsstellung die Druckgasleitung 37 sperrt. Das Absperrventil 38 ist beispielsweise elektromagnetisch betätigbar und wird bei elektromagnetischer Erregung aus seiner sperrenden Ausgangsstellung in seine Durchlaßstellung bewegt. Stromabwärts des Absperrventiles 38 ist in der Druckgasleitung 37 ein veränderbares Druckregelventil 39 angeordnet, das den Gasdruck stromabwärts des Druckregelventiles weitgehend auf einem einstellbaren Regeldruck konstant hält. Das Druckregelventil 39 wirkt dabei als Druckminderventil, an dem z. B. mit veränderlicher elektromagnetischer Kraft angegriffen wird, um den stromabwärts in der Druckgasleitung 37 zu regelnden Regeldruck vorzugeben. Das Druckregelventil 39 mindert somit den stromaufwärts des Druckregelventiles 39 herrschenden Druck des Druckgases auf einen stromabwärts des Druckregelventiles in der Druckgasleitung herrschenden niederen Regeldruck. Eine Änderung des Regeldruckes kann außer durch die beschriebene elektromagnetische Betätigung auch beispielsweise durch eine pneumatische Verstellung des Druckregelventils 39 erfolgen. Stromabwärts des Druckregelventiles 39 ist an die Druckgasleitung 37 ein Druckmeßgerät 40 angeschlossen, durch das der Regeldruck in der Druckgasleitung 37 erfaßt und gegebenenfalls angezeigt werden kann. Das Absperrventil 38, das veränderbare Druckregelventil 39 und das Druckmeßgerät 40 stellen Aggregate bekannter Bauart dar. Die Druckgasleitung 37 endet stromabwärts des Druckmeßgerätes 40 in einem Einlaßanschlußkörper 43, der eine mit der Druckgasleitung 37 in Verbindung stehende Einlaßaufnahmeöffnung 44 hat. Ebenfalls Bestandteil der erfindungsgemäßen Vorrichtung ist ein Auslaßanschlußkörper 45 mit einer Auslaßaufnahmeöffnung 46. Mit der Auslaßaufnahmeöffnung 46 des Auslaßanschlußkörpers 45 ist eine Auslaßleitung 47 verbunden, in der ein ein Durchflußmeßgerät 50 bekannter Bauart angeordnet ist. In der Figur 2 ist als bekanntes Durchflußmeßgerät 50 ein Schwebekörper-Durchflußmesser dargestellt, bei dem die Stellung des Schwebekörpers 51 mittels eines elektrischen Meßumformers 52 photoelektrisch erfaßt und als Meßsignal einem elektronischen Steuer- und Auswertegerät 55 zugeführt wird. Dem elektronischen Steuer- und Auswertegerät 55 wird ebenfalls der Meßwert des vom Druckmeßgerät 40 gemessenen Regeldruckes zugeführt. Außerdem kann das Steuer- und Auswertegerät 55 dazu dienen, das Absperrventil 38 und das Druckregelventil 39 zu steuern.

Zur Durchführung des Verfahrens zur Ermittlung der Federkraft einer Schließfeder beim Öffnen eines Ventiles wird beispielsweise das Brennstoffeinspritzventil 4 verwendet. Hierzu wird der Einlaßanschlußkörper 43 mit seiner Einlaßaufnahmeöffnung 44 auf den Auslaßanschluß 10 des Brennstoffeinspritzventiles 4 gesteckt. Ein am Umfang des Auslaßanschlusses 10 vorgesehener Dichtring 57 dichtet dabei zur Wandung der Einlaßaufnahmeöffnung 44 hin. Der Auslaßanschlußkörper 45 wird mit der Auslaßaufnahmeöffnung 46 auf den Einlaßanschluß 1 des Brennstoffeinspritzventiles gesteckt, wobei ein Dichtring 58 am Umfang des Einlaßanschlusses 1 zur Wandung der Auslaßaufnahmeöffnung 46 hin dichtet. Das Brennstoffeinspritzventil 4 befindet sich während der Durchführung des Verfahrens in einem nicht erregten Zustand, d. h., die Schließfeder 21 hält den Ventilschließkörper 12 am Ventilsitz 11, so daß das Ventil sich in seinem geschlossenen Zustand befindet. Die Durchführung des Verfahrens zur Ermittlung der Federkraft der Schließfeder kann z. B. durch ein im Steuer- und Auswertegeräte vorgegebenes Programm derart erfolgen, daß das Absperrventil 38 elektromagnetisch erregt und damit in seine Durchgangsstellung betätigt wird. Hierdurch steht der durch die Druckgasquelle 35 bzw. die Pumpe 36 vorgegebene Druck des Druckgases am Eingang des veränderbaren Druckregelventiles 39 an. Das Druckregelventil 39 ist dabei so eingestellt, daß es an seinem Ausgang einen Regeldruck regelt, der seinem kleinsten Regeldruck entspricht und so gering ist, daß er nicht geeignet ist, den Ventilschließkörper 12 entgegen der Federkraft der Schließfeder 21 vom Ventilsitz 11 abzuheben. Das Druckregelventil 39 wird nun beispielsweise durch das Steuer- und Auswertegerät 55 derart elektromagnetisch angesteuert, daß der Regeldruck an seinem Ausgang gleichmäßig und stetig ansteigt. Der stetig steigende Regeldruck wird durch das Druckmeßgerät 40 gemessen und durch das Steuer- und Auswertegerät 55 erfaßt. Erreicht der Regeldruck stromabwärts des Druckregelventiles 39 eine Größe, die ausreicht, den Ventilschließkörper 12 entgegen der Federkraft der Schließfeder 21 vom Ventilsitz 11 des Brennstoffeinspritzventiles 4 abzuheben, so strömt Druckgas in die Auslaßleitung 47, und das Durchflußmeßgerät 50 zeigt eine Druckgasströmung an, wobei der Beginn der Strömung in der Auslaßleitung 47 durch eine Änderung der Stellung des Schwebekörpers 51 des hier beispielsweise verwendeten Schwebekörper-Durchflußmessers mittels des Meßumformers 52 erfaßt und als Meßsignal dem Steuer- und Auswertegerät 55 eingegeben wird. Der zum Zeitpunkt des die Öffnung des Brennstoffeinspritzventiles 4 kennzeichnenden Meßsignals des Durchflußmeßgerätes 50 gemessene Regeldruck am Druckmeßgerät 40 wird von dem Steuer- und Auswertegerät 55 erfaßt und in einen die Federkraft der Schließfeder 21 beim Öffnen des Brennstoffeinspritzventiles 4 kennzeichnenden Wert umgerechnet, der im Steuer- und Auswertegerät 55 gespeichert, am Steuer- und Auswertegerät abgelesen oder ausgedruckt werden kann. Die Federkraft der Schließfeder beim Öffnen des Brennstoffeinspritzventiles 4 wird im Steuer- und Auswertegerät 55 dadurch ermittelt, daß der beim Öffnen des Brennstoffeinspritzventiles vom Druckmeßgerät 40 gemessene Regeldruck mit der Fläche des Ventilschließkörpers 12 multipliziert wird, die bei geschlossenem Brennstoffeinspritzventil durch den Regeldruck der Druckgasleitung 37 beaufschlagt wird. Diese vom Regeldruck beaufschlagte Fläche des Ventilschließkörpers 12 ist durch die Herstellung des Brennstoffeinspritzventiles bekannt und kann als fester Faktor dem Steuer- und Auswertegerät 55 eingegeben werden.

Durch das erfindungsgemäße Verfahren ergibt sich der Vorteil, daß die Federkraft am fertig montierten Ventil ermittelt werden kann, wobei keinerlei Zerstörung oder Verschmutzung des Ventiles erfolgt. Das erfindungsgemäße Verfahren ermöglicht auch die Messung der Federkraft bei Ventilen, deren Ventilschließkörper von außen im montierten Zustand nur noch sehr schwer zugänglich ist, wie dies bei dem Brennstoffeinspritzventil 4 in Figur 1 beispielsweise gezeigt ist.

## Patentansprüche

1. Verfahren zur Ermittlung der Federkraft einer Schließfeder beim Öffnen eines Ventiles, insbesondere eines Brennstoffeinspritzventiles, mit wenigstens einem Einlaßanschluß und wenigstens einem Auslaßanschluß sowie mit einem Ventilschließkörper, der durch die Schließfeder in Richtung zu einem Ventilsitz hin beaufschlagt wird, dadurch gekennzeichnet, daß der Auslaßanschluß (10) bei geschlossenem Ventil (4) mit einer Druckgasleitung (37), an der ein Druckmeßgerät (40) und in der stromaufwärts des Druckmeßgerätes (40) in Reihe ein veränderbares Druckregelventil (39), ein Absperrventil (38) und eine Druckgasquelle (35, 36) angeordnet sind, und der Einlaßanschluß (1) mit einem Durchflußmeßgerät (50) verbunden wird, dann das geschlossene Absperrventil (38) geöffnet wird, danach das Druckregelventil (39) so betätigt wird, daß der Regeldruck in der Druckgasleitung (37) stromabwärts des Druckregelventils (39) ausgehend von einem niederen Regeldruck so lange ansteigt, bis das Ventil (4) öffnet und Druckgas zum Durchflußmeßgerät (50) strömt, das ein die Öffnung des Ventiles (4) kennzeichnendes Meßsignal an ein elektronisches Steuer- und Auswertegerät (55) liefert und abschließend der zum Zeitpunkt des kennzeichnenden Meßsignals vom Druckmeßgerät (40) gemessene Regeldruck vom Steuer- und Auswertegerät (55) erfaßt, in einen die Federkraft der Schließfeder (21) beim Öffnen des Ventiles (4) kennzeichnenden Wert umgerechnet und angezeigt wird.

2. Vorrichtung zur Ermittlung der Federkraft einer Schließfeder beim Öffnen eines Ventiles, insbesondere eines Brennstoffeinspritzventiles, mit wenigstens einem Einlaßanschluß und wenigstens einem Auslaßanschluß sowie mit einem Ventilschließkörper, der durch die Schließfeder in Richtung zu einem Ventilsitz hin beaufschlagt wird, gekennzeichnet durch einen mit einer Druckgasleitung (37) verbundenen Einlaßanschlußkörper (43) zur Verbindung mit dem Auslaßanschluß (10) des Ventiles (4), einen mit einer Auslaßleitung (47) verbundenen Auslaßanschlußkörper (45) zur Verbindung mit dem Einlaßanschluß (1) des Ventiles (4), ein in der Auslaßleitung (47) angeordnetes Durchflußmeßgerät (50), ein an der Druckgasleitung (37) angeordnetes Druckmeßgerät (40) und stromaufwärts des Druckmeßgerätes (40) in Reihe in der Druckgasleitung (37) angeordnet ein veränderbares Druckregelventil (39), ein Absperrventil (38) sowie eine Druckgasquelle (35, 36) und ein mit dem Durchflußmeßgerät (50) und dem Druckmeßgerät (40) elektrisch verbundenes elektronisches Steuer- und Auswertegerät (55).

## Claims

1. Method for determining the spring force of a closing spring upon the opening of a valve, particularly a fuel injection valve, with at least one inlet connection and at least one outlet connection and with a valve-closing element which is acted upon in the direction of a valve seat by the closing spring, characterized in that, with the valve (4) closed, the outlet connection (10) is connected to a pressurized-gas line (37), arranged in which are a pressure-measuring device (40) and, upstream of the pressure-measuring device (40), in series, a variable pressure-regulating valve (39), a shut-off valve (38) and a pressurized-gas source (35, 36), and the inlet connection (1) is connected to a flow meter (50), the closed shut-off valve (38) is then opened, after which the pressure-regulating valve (39) is actuated in such a way that the control pressure in the compressed-gas line (37) downstream of the pressure-regulating valve (39) rises from a low control pressure until the valve (4) opens and pressurized gas flows to the flow meter (50), which supplies a measurement signal characterizing the opening of the valve (4) to an electronic control and evaluation unit (55), and, finally, the control pressure measured by the pressure-measuring device (40) at the time of the characterizing measurement signal is recorded by the control and evaluation unit (55), converted into a value which characterizes the spring force of the closing spring (21) upon the opening of the valve (4) and indicated.

2. Apparatus for determining the spring force of a closing spring upon the opening of a valve, particularly a fuel injection valve, with at least one inlet connection and at least one outlet connection and with a valve-closing element which is acted upon in the direction of a valve seat by the closing spring, characterized by an inlet connection body (43), connected to a pressurized-gas line (37), for connection to the outlet connection (10) of the valve (4), an outlet connection body (45), connected to an outlet line (47), for connection to the inlet connection (1) of the valve (4), a flow meter (50) arranged in the outlet line (47), a pressure-measuring device (40) arranged on the pressurized-gas line (37) and, arranged in series in the pressurized-gas line (37), upstream of the pressure-measuring device (40), a variable pressure-regulating valve (39), a shut-off valve (38), a pressurized-gas source (35, 36) and an electronic control and evaluation unit (55) connected electronically to the flow meter (50) and the pressure-measuring device (40).

## Revendications

1. Procédé pour déterminer la résilience d'un ressort de fermeture lors de l'ouverture d'une soupape, en particulier d'un injecteur de carburant, comprenant au moins un raccord d'entrée et au moins un raccord de sortie ainsi qu'un corps de fermeture sollicité par le ressort de fermeture en direction d'un siège de soupape,
caractérisé en ce que
- le raccord de sortie (10) quand la soupape (4) est fermée est relié à une conduite de gaz sous pression (37), sur laquelle est disposé un appareil de mesure de pression (40) et dans lequel sont disposés en amont de l'appareil de mesure de pression (40) en série une vanne de réglage de pression (39) variable, une vanne d'obturation (38), et une source de gaz sous pression (35, 36), et le raccord d'entrée (1) est relié à un appareil de mesure du débit (50), puis la vanne d'obturation (38) fermée est ouverte, ensuite la vanne de réglage de pression (39) est actionnée d'une manière telle que la pression de réglage augmente dans la conduite de gaz sous pression (37) en aval de la vanne de réglage de pression (39), en partant d'une pression de réglage basse, jusqu'à ce que la soupape (4) s'ouvre et que le gaz sous pression s'écoule vers l'appareil de mesure de débit (50), qui délivre un signal de mesure, caractérisant l'ouverture de la soupape (4), à un appareil électronique de commande et d'exploitation (55) ; et
- finalement la pression de réglage, mesurée par l'appareil de mesure de pression (40), à l'instant du signal caractéristique de mesure, est détectée par l'appareil de commande et d'exploitation (55), et est convertie en une valeur qui caractérise la résilience du ressort de fermeture (21) lors de l'ouverture de la soupape (4) et est affichée.

2. Dispositif servant à déterminer la résilience d'un ressort de fermeture lors de l'ouverture d'une soupape, en particulier d'un injecteur de carburant, comprenant au moins un raccord d'entrée et au moins un raccord de sortie ainsi qu'un corps de fermeture sollicité par le ressort de fermeture en direction d'un siège de soupape,
caractérisé par
un corps de raccord d'entrée (43), relié à une conduite de gaz sous pression (37), servant à le relier au raccord de sortie (10) de la soupape (4), un corps de raccord de sortie (45), relié par une conduite de sortie (47) au raccord d'entrée (1) de la soupape (4), un appareil de mesure du débit (50) disposé dans la conduite de sortie (47), un appareil de mesure de pression (40) disposé sur la conduite de gaz sous pression (37) et, en amont de l'appareil de mesure de pression (40), disposés en série sur la conduite de gaz sous pression (37), une vanne de réglage de pression (39), une vanne d'obturation (38), ainsi qu'une source de gaz sous pression (35, 36), et un appareil électronique de commande et d'exploitation (55) qui est relié électriquement à l'appareil de mesure de débit (50) et à l'appareil de mesure de pression (40).
